Europäisches Patentamt

European Patent Office

Office européen des brevets

(19)

(11) Veröffentlichungsnummer: **0 270 702**
**B1**

(12) # EUROPÄISCHE PATENTSCHRIFT

(45) Veröffentlichungstag der Patentschrift:
26.07.89

(51) Int. Cl.⁴: **B65G 19/22**, F16B 39/10, F16B 35/04

(21) Anmeldenummer: 86117263.3

(22) Anmeldetag: 11.12.86

(54) Mitnehmer für Kettenkratzförderer, insbesondere des Untertagebetriebs.

(43) Veröffentlichungstag der Anmeldung:
15.06.88 Patentblatt 88/24

(45) Bekanntmachung des Hinweises auf die Patenterteilung:
26.07.89 Patentblatt 89/30

(84) Benannte Vertragsstaaten:
AT BE CH DE ES FR GB GR IT LI LU NL SE

(56) Entgegenhaltungen:
DE-A- 3 130 953
DE-B- 1 040 322
FR-A- 716 676
FR-A- 2 340 261

(73) Patentinhaber: Becker-Prünte GmbH,
August-Becker-Strasse 10, D-4354 Datteln
Westfalen(DE)
Patentinhaber: Stahlhammer Bommern Gebr. Schneider,
Carl-Zeiss-Strasse 7, D-4700 Hamm 3(DE)

(72) Erfinder: Niemöller, Gerhard, Dipl.-Ing., Schörlinger
Strasse 21, D-4355 Waltrop(DE)
Erfinder: Stromberg, Wilfried, Heidkamp 8,
D-4716 Olfen(DE)
Erfinder: Schneider, Friedhelm, Zum Torksfeld 42b,
D-4700 Hamm 3(DE)

(74) Vertreter: Herrmann-Trentepohl, Werner, Dipl.-Ing. et al,
Schaeferstrasse 18, D-4690 Herne 1(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Mitnehmer für Kratzförderer, insbesondere des Untertagebetriebes gemäß dem Oberbegriff des Patentanspruches 1 und wie aus der Druckschrift DE-A 3 130 953 bekannt.

Die erfindungsgemäßen Mitnehmer werden zusammen mit einer Mittelkette, einer Doppelmittelkette oder zwei parallelen Außenketten zu einem in einem Rinnenstrang endlos umlaufenden Kettenband montiert. Das an mindestens einem Ende von Kettenrädern einer Antriebswelle angetriebene Kettenband bildet den umlaufenden Teil eines Stetigförderers, in dem die Mitnehmerunterteile auf den Böden der zu dem stationären Teil zusammengeschlossenen Förderrinnen im Obertrum das Schüttgut in kleinen Schüttguthaufen kratzend vor sich herschieben. Die Mitnehmerenden sind beim Umlauf des Kettenbandes in seitlichen Längsprofilen der Förderrinnen geführt, die sowohl im Untertrum wie auch im Obertrum an den Rinnen vorhanden sind. Die erfindungsgemäßen Mitnehmer sind in Querrichtung des in Förderrichtung umlaufenden Kettenbandes geteilt. Dadurch ist es möglich, das Kettenband aus Langstrangketten zusammenzubauen, welche in der Regel Rundstahlketten sind. Mit Hilfe der in den beiden Mitnehmerteilen ausgebildeten Kettenbetthälften können die Mitnehmer an beliebiger Stelle einer Langstrangkette formschlüssig festgesetzt werden.

Insbesondere bezieht sich die Erfindung auf Mitnehmer, die in Querrichtung längs einer horizontalen Ebene mit an außen und oben divergierenden Enden in zwei, meistens ungleiche Teile zerlegbar sind. Dadurch ist es einerseits möglich, das relativ verschleißunanfällige Mitnehmeroberteil mehrfach zu verwenden, wenn die durch die Fördererarbeit höher beanspruchten Mitnehmerunterteile verschlissen sind. Andererseits können die längs der horizontalen Ebene geteilten Kettenbetten beim Anziehen der senkrechten Durchsteckschrauben mit Hilfe der vollen Kraft der Schrauben senkrecht mit den horizontalen Kettengliedern verspannt werden, die in den Kettenbetten angeordnet sind. Dieses Verspannen läßt sich mit Hilfe von flach ausgerundeten Kanälen zur Aufnahme der Kettengliedschenkel und dadurch erzielen, daß die horizontalen Trennflächen der Kettenbetthälften in geringem Abstand voneinander bei verspanntem Kettenglied verbleiben. Dadurch ist es möglich, die Mitnehmer mit leistenförmigen Abschnitten ihrer Unterteile in die Zahnlücken der Kettenräder einzuspuren, ohne daß hierbei Relativbewegungen zwischen den Mitnehmern und den mit ihnen verspannten horizontalen Kettengliedern auftreten. Es sind nämlich diese zunächst kleinen Relativbewegungen, welche die Ursache für die sich schnell vergrößernden Verschleißbewegungen bilden, die zum Ausschlagen der Kettenbetten und damit zu Mitnehmerlockerungen führen. Gelockerte Mitnehmer verbiegen leicht und unterliegen noch höherem Verschleiß.

Der erfindungsgemäße Mitnehmer läßt ein Auswechseln verschlissener oder verbogener Mitnehmer auch bei montiertem Kettenband zu. Im allgemeinen weisen die beschriebenen Kettenförderer des Untertagebetriebes in ihren Übergangsrinnen Kettenanschläge auf, die bedarfsweise nutzbar sind und gegen die das Kettenband mit den Fördererantrieben gefahren wird, wodurch im Ober- bzw. Untertrum Schlaffkette erzeugt werden kann. Durch Lösen der obenliegenden Muttern können die Mitnehmer in ihre Einzelteile zerlegt und dadurch demontiert werden, während nach Aufstecken der Mitnehmeroberteile auf die Schraubenbolzen der Durchsteckschrauben die Muttern zur Montage eines Mitnehmers angezogen werden. Hierbei ist der Schraubenbolzen gegen Mitdrehen in der diesem zugeordneten Aussparung des Mitnehmerunterteiles gesichert.

Die Erfindung geht von einem vorbekannten Mitnehmer dieser Art aus (DE-OS 27 17 449). Hierfür werden Durchsteckschrauben benutzt, die mit ihrem drehfest auf dem Schraubenbolzen angeordneten Sechskantkopf mit entsprechenden Gegenflächen in den Kopfaussparungen der Mitnehmerunterteile formschlüssig werden und dadurch beim Aufschrauben der Muttern das Mitdrehen verhindern. Schwierigkeiten entstehen dann allerdings, wenn das Untertrum des stationären Rinnenstranges mit Abdeckblechen der Rinnen verschlossen ist. Diese Maßnahme trifft man an den Förderrinnen häufig, um Behinderungen des Kettenbandumlaufes durch Unebenheiten der Sohle, auf der der Förderer verlegt ist, zu verhindern. Man sieht dann in den Bodenblechen bestimmter, jedoch im Rinnenstrang in kurzen Abständen angeordneten Förderrinnen sogenannte Inspektionsöffnungen vor. Diese Inspektionsöffnungen sind mit eingepaßten Rinnenblechen verschlossen, die mit Hilfe von Senkschrauben befestigt ist, um den Durchgang der Mitnehmerunterteile im fördernden Obertrum des Rinnenstranges nicht zu behindern.

Im Betrieb solcher Förderer zeigt sich nämlich, daß die Unterkette, d.h. das rücklaufende Kettentrum in erheblichem Umfang Schüttgut, z.B. Feinkohle und Berge einzieht. Diese Partikel werden von den Mitnehmeroberteilen überlaufen und ballen und klumpen sich schließlich zu fest verbackenden Hindernissen zusammen. Diese können den Umlauf des Kettenbandes hemmen oder gar blockieren. Während die zunächst auftretenden Widerstände der Unterkette zu einem erheblichen Mehrverbrauch an Energie führen, kann das Blockieren des Kettenbandes im Untertrum zu Kettenrissen führen. Treten Kettenrisse der Unterkette auf, so sind sie besonders schwer zu beseitigen. Bei einer solchen Störung muß zunächst die Rinne aufgesucht werden, in deren Untertrum das Hindernis liegt. Nach Entfernen der Verschraubung des Bodenbleches ist das Untertrum des Kettenbandes von oben zugänglich. Dann muß versucht werden, das festgebackene Hindernis zu entfernen und bei einem aufgetretenen Kettenriß die Kettenenden wieder zusammenzuführen, die man normalerweise mit einem Notglied verbindet, sobald die Kettenenden mit den Fördererantrieben wieder zusammengefahren sind. Bei der üblichen Mitnehmerbefestigung führen derartige Förderstörungen zu ihrer Beseitigung zu erheblichen Stillständen. Das beruht zum wesentlichen Teil darauf, daß die Mitnehmer im Untertrum durch die Montageöffnung hindurch nicht demontiert werden können. Das findet seinen Grund darin, daß die Mitnehmeroberteile im Untertrum des Rinnenstranges unten angeordnet sind, so daß die Sechskantköpfe der Durchsteckschrauben oben liegen, aber nicht gedreht werden können, während die Muttern unten angeordnet und damit für das Drehen unzugänglich sind.

Der Erfindung liegt die Aufgabe zugrunde, einen Mitnehmer der eingangs als bekannt vorausgesetzten Art zu schaffen, der sich unter ungünstigen äußeren Bedingungen leicht demontieren und montieren läßt.

Diese Aufgabe löst die Erfindung mit den Merkmalen des Patentanspruches 1. Zweckmäßige Ausführungsformen sind Gegenstand der Unteransprüche.

Gemäß der Erfindung wird die Mitdrehsicherung jeder Spannschraube in das Innere des Mitnehmers verlegt und dadurch der Schraubenkopf für Drehbewegungen freigegeben, die durch die Ausbildung des Schraubenkopfes als Mutter ausnutzbar sind. Mit Hilfe einer an der Mutter angeordneten Losdrehsicherung im Mitnehmerunterteil wird gewährleistet, daß die Mitdrehsicherung im formschlüssigen Eingriff mit dem Mitnehmerunterteil verbleibt.

Wenn ein solcher Mitnehmer im Untertrum eines blockierten Kettenbandes nach Freimachen der Montageöffnung durch Entfernen des Verschlußbleches freigelegt ist, lassen sich die die Köpfe der Durchsteckschrauben bildenden Muttern losdrehen, gegebenenfalls nachdem die Losdrehsicherung dieser Mutter überwunden worden ist. Da die Mitdrehsicherung formschlüssig in der Trennebene des Mitnehmerunterteils untergebracht ist, läßt sich dann das Mitnehmerunterteil von den Schrauben abziehen. Damit sind auch die mit den Mitnehmeroberteilen verspannten horizontalen Kettenglieder freigelegt. Die Mitnehmeroberteile, welche im Untertrum nach unten orientiert sind und auf den Abdeckblechen laufen, können deshalb gegenüber den Kettensträngen verdreht und dadurch aus dem Formschluß mit den horizontalen Kettengliedern gelöst werden. Danach ist die Beseitigung eines Hindernisses für den Durchlauf der Unterkette durch die Montageöffnung hindurch problemlos. Die erneute Montage der Mitnehmer läßt sich nach Beseitigung des Hindernisses auf umgekehrtem Wege durchführen.

Der erfindungsgemäße Mitnehmer hat den Vorteil, daß er die als bekannt vorausgesetzte, zweckmäßige Bauweise ermöglicht, bei der die horizontalen Kettenglieder mit den vollen Schraubenkräften in den Kettenbetten verspannbar sind. Diese Mitnehmer unterscheiden sich vorteilhaft von anderen Mitnehmern, bei denen die Spannschrauben im Winkel zur Förderrichtung oder parallel zur Förderrichtung angeordnet sind, weil bei solchen Konstruktionen eine feste Verspannung der horizontalen Kettenglieder nicht gewährleistet ist.

Vorzugsweise und mit den Merkmalen des Patentanspruches 2 läßt sich die Erfindung durch Spannschrauben verwirklichen, welche Normmuttern verwenden können. Hierbei ist nur der Schraubenbolzen eine Sonderanfertigung. Hierdurch kann die Ausführungsform nach dem Patentanspruch 3 relativ einfach vewirklicht werden, weil nur die beiden sich gegenüberstehenden Längsrippen auf dem glattzylindrischen Teil des Schraubenbolzens anzuordnen sind. Die Ausführungsform nach Anspruch 4 hat dagegen den Vorteil, daß die gegen Mitdrehen sperrenden Flächen des Schraubenbolzens und der Aussparung für diese Sicherung relativ größer ausfallen, wodurch das Aufsuchen der richtigen Stellung des Schraubenbolzens erleichtert wird.

Im allgemeinen wird man die Erfindung mit den Merkmalen des Patentanspruches 5 ausführen. Wenn man nämlich die Durchsteckschrauben und mit ihre Köpfe bildenden Muttern, sowie deren Losdrehsicherungen vormontiert, spart man die vor Ort besonders teure Arbeitszeit und beschleunigt die Arbeiten im Hinblick auf eine erwünschte Verkürzung der Fördererstillstandszeiten. Die Vormontage ist außerhalb der Förderrinne auch einfacher auszuführen als das Einbringen der Schraubenbolzen in die bereits in der Förderrinne liegenden Unterteile.

Mit dem Patentanspruch 6 wird eine Möglichkeit geschaffen, festsitzende Muttern durch die beschriebenen Montageöffnungen hindurch zu lösen, indem man die Muttern z.B. aufkreuzt. Denn die bei dieser Ausführungsform vorgesehenen Montageausnehmungen treffen einen seitlichen Zugang zu den Muttern, die festgerostet oder auch bei mechanisch verformten Mitnehmern blockiert sein können. Die Merkmale des Patentanspruches 7 führen in diesem Zusammenhang zu einer günstigen Anordnung und Ausbildung der Montageöffnung.

Die Erfindung, soweit bislang beschrieben, ändert noch nichts an den Ursachen von Förderstörungen, wohl aber an der Langwierigkeit ihrer Beseitigung, indem sie die Montage und Demontage der Mitnehmer auch im Untertrum erleichtert. Die Ursache der Förderstörungen ist allerdings nicht das eingangs beschriebene Einziehen von feinkörnigem Schüttgut, z.B. von Feinkohle und Bergen in das mit den Abdeckblechen verschlossene Untertrum des Kettenrücklaufes. Die Ursache der Förderstörungen ist vielmehr das Festbacken dieser Partikel. Die Erfindung vermeidet die dadurch bedingten Blockierungen.

Das geschieht mit den Merkmalen des Patentanspruches 8.

Hierdurch werden nämlich die Mitnehmeroberteile mit vorlaufenden Kratzkanten versehen, welche das Schüttgut auf den Abdeckblechen der Rinnenuntertrume kratzend vorwärtsbewegen. Dieses Schüttgut tritt an dem in Förderrichtung rückwärtigen Ende des Stetigförderers aus und kann deswegen das Untertrum nicht mehr blockieren.

Diese erfindungsgemäße Ausbildung des Mitnehmers hat auch den Vorteil, daß die Art der Ausbildung des Kratzers eine Verschleißbeseitigung im Oberteil zuläßt. Da nämlich die Oberseite der vorlaufenden Querrippe nach unten und ihre Vorderseite nach hinten abgewinkelt sind, kann eingetretener Verschleiß durch Abschleifen der Mitnehmeroberseite bzw. durch Auftragschweißungen behoben werden, wodurch die Kratzkante wieder hergestellt wird.

Mit den Merkmalen des Patentanspruches 9 wird eine vergrößerte Verschleißreserve geschaffen, wobei gleichzeitig die Wirksamkeit der Kratzkante so lange erhalten bleibt, bis die nicht verschlissene nachlaufende Querrippe das Ablaufblech berührt.

Die Einzelheiten, weiteren Merkmale und andere Vorteile der Erfindung ergeben sich aus der nachfolgenden Beschreibung einer Ausführungsform anhand der Figuren in den Zeichnungen.

Es zeigen

Fig. 1 in einem Querschnitt, welcher jenseits der Mittellinie abgebrochen ist,
Mitnehmer gemäß der Erfindung und einer ersten Ausführungsform in einem Rinnenstrang eines Stegigförderers des Untertagebetriebes,
Fig. 2 eine abgebrochene Darstellung im Schnitt längs der Linie II-II der Fig. 1,
Fig. 3 den Schraubenbolzen einer Durchsteckschraube im Querschnitt,
Fig. 4 in der Fig. 1 entsprechender Darstellung eine abgeänderte Ausführungsform der Erfindung,
Fig. 5 eine Draufsicht auf den Gegenstand der Fig. 4 und
Fig. 6 im Querschnitt den Schaft einer Spannschraube gemäß der Erfindung.

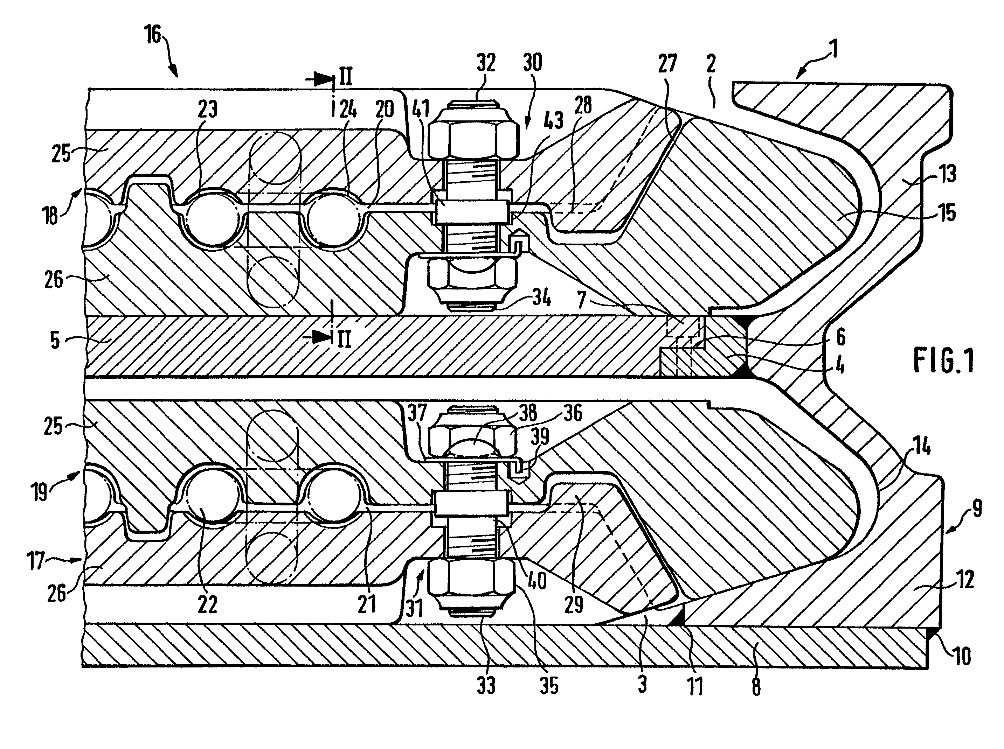

Gemäß der Darstellung der Fig. 1 weist der stationäre Teil (1) eines Kettenkratzförderers des Untertagebetriebes ein Obertrum (2) und ein Untertrum (3) auf. Zur Trennung beider Trume dient ein Bodenblech (4). Dargestellt ist ein Verschlußblech (5) einer Montageöffnung, die nach Entfernen des Bleches (5) freiliegt. Dazu sind die Längskanten des Bodenbleches (4) und des Verschlußbleches (5), wie bei (6) dargestellt, abgestuft. Mit Hilfe von Senkkopfschrauben (7), die längs jeder abgestuften Kante der Bleche (4 und 5) im Abstand voneinander angeordnet sind, sind die Bleche miteinander verschraubt. Nach Losdrehen der Schrauben können die Bleche (5) entfernt werden. Dadurch kann das Untertrum (3) von oben inspiziert werden.

Das Untertrum (3) ist unten mit einem Abdeckblech (8) verschlossen. Das Abdeckblech ist mit den Seitenprofilen (9) längs zweier paralleler Kanten, wie bei (10 und 11) dargestellt, verschweißt. Die Seitenprofile (9) weisen je einen Flansch (12 bzw. 13) auf. Beide Flanschen bilden innen ein umschließendes Profil (14) für die Enden (15) der unter sich gleich ausgebildeten Mitnehmer (16) im Obertrum des endlosen Kettenbandes bzw. (17) der rücklaufenden Kette. Die Mitnehmer sind zur Verspannung mit einer Doppelmittelkette vorgesehen. Dementsprechend weisen sie für die beiden parallelen Mittelketten je ein Kettenbett (18, 19 bzw. 20, 21) auf. Die Kettenbetten sind unter sich gleich und dienen zum Verspannen jeweils eines horizontalen Kettengliedes (22) einer Rundgliederkett. Zu diesem Zweck sind parallele Kettenkanäle (23, 24) vorgesehen, deren Rundungen nach einem leicht abweichenden größeren Radius im Vergleich mit den Rundungen des Kettenstahls der horizontalen Kettenglieder ausgebildet sind.

Jeder Mitnehmer weist ein Mitnehmeroberteil (25) und ein Mitnehmerunterteil (26) auf. Dazu ist jeder Mitnehmer (16, 17) längs einer horizontalen Ebene mit nach außen und oben abgewinkelten Enden geteilt. An den Teilflächen befinden sich außen formschlüssig ineinandergreifende Rippen (28, 29), die eine Verschiebung der Mitnehmerteile (25, 26) in Förderrichtung ausschließen.

Zur Verspannung der horizontalen Kettenglieder in den Kettenbetten (18, 19 bzw. 20, 21) und von Mitnehmerober- und -unterteil (25, 26) dient je eine Durchsteckschraube (30, 31), die dem betreffenden Mitnehmerende (15) zugeordnet ist. Auch die Durchsteckschrauben (30, 31) sind in allen Mitnehmern gleich ausgebildet.

Die Durchsteckschraube weist einen Schraubenschaft (32) auf. Beide Enden des Schaftes sind mit je einem Muttergewinde (33, 34) versehen. Dadurch ist dem Mitnehmeroberteil (25) eine Mutter (35) zugeordnet, welche auf das Muttergewinde (33) aufgeschraubt werden kann. Andererseits ist dem Muttergewinde (34) und damit dem Mitnehmeroberteil (25) auch eine Mutter (36) zugeordnet, die mit einer Losdrehsicherung (37) in Form eines zweifach abgewinkelten Bleches versehen ist. Die nach oben abgewinkelte Blechzunge (38) hält die Mutter, während die nach unten abgewinkelte Blechzunge (39) das Blech (37) in einer Aussparung des Mitnehmeroberteils (25) festhält.

Der mittlere, glattzylindrische Teil (40) jedes Schraubenbolzens ist an der Trennebene formschlüssig mit dem Mitnehmerunterteil (26). Dazu dient ein axial symretrisch im Glattzylinder (40) angeordneter Sicherungsflansch (41). Dieser findet seinen Formschluß in einer Ausnehmung 43 einer Aussparung (42) des Mitnehmerunterteils (26).

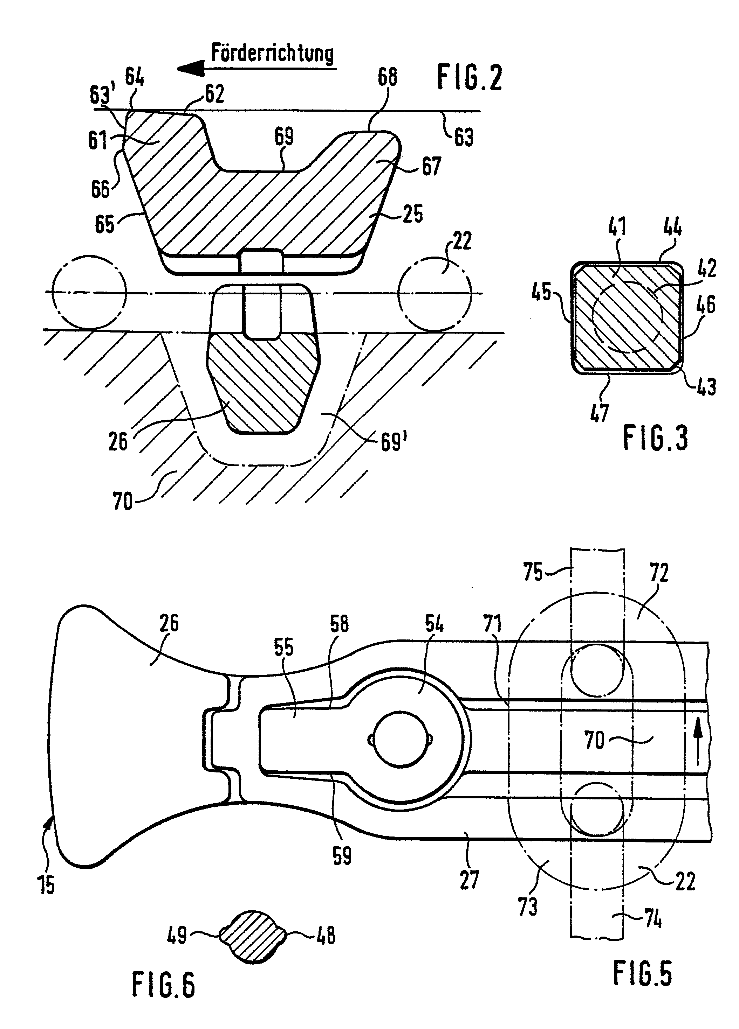

Wie die Fig. 3 zeigt, ist die Ausnehmung (43) von quadratischem Umriß, wodurch vier sperrend wirkende Flächen (44 bis 47) für den in diesem Fall mit quadratischem Querschnitt versehenen Sicherungs flansch (41) entstehen.

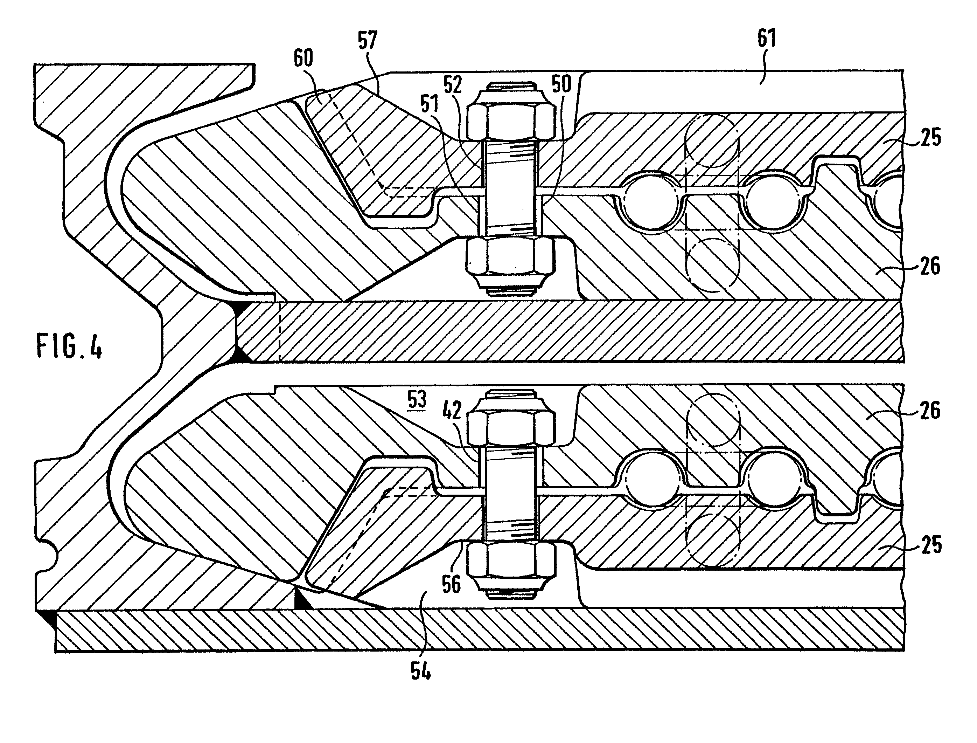

Das Ausführungsbeispiel nach den Fig. 4 und 5 unterscheidet sich von dem Ausführungsbeispiel nach den Fig. 1 bis 3 durch die Ausbildung des Sicherungsflansches. Im Ausführungsbeispiel nach Fig. 4 ist der Sicherungsflansch nur zum Teil, nämlich gemäß der Darstellung nach Fig. 6 mit zwei diametral gegenüberliegenden Längsrippen (48, 49) verwirklicht, die mit entsprechenden Ausnehmungen (50, 51) in der Aussparung (42) des Mitnehmerunterteils (26) zusammenwirken. Das Mitnehmeroberteil hat in allen Ausführungsformen ebenfalls eine Aussparung (52) für den zylindrischen Teil des betreffenden Schraubenbolzens.

Wie sich anhand der Darstellung der Fig. 4 verdeutlichen läßt, sind in allen Ausführungsformen der Erfindung außer den Aussparungen (43 und 52) für den glattzylindrischen Teil des Schraubenbolzens im Mitnehmeroberteil (25) für jede Spannschraube eine Aussparung (53) für die Mutter vorgesehen, der eine Aussparung (54) im Mitnehmeroberteil (25) entspricht, mit der die andere Mutter der Spannschraube versenkt angeordnet wird.

Anhand der Fig. 5 sind radiale Montageausnehmungen (55) verdeutlicht, welche in den Aussparungen (53 bzw. 54) von Mitnehnmerunterteil (26) bzw.

Mitnehmeroberteil (25) ausgebildet sind. Diese Aussparungen (55) sind radial angeordnet und auf die Mitnehmerenden (15) gerichtet. Wie die Fig. 4 am Beispiel der Aussparung (55) zeigt, weist jede Aussparung dieser Art einen schräg nach außen von der Aussparungsringfläche (56) nach oben und zum Mitnehmerende (l5) hin gerichteten Boden (57) auf. Die Aussparung hat parallele Wände (58, 59), die bis zum Boden reichen und nach außen divergieren.

Gemäß der Darstellung der Fig. 2 weist das Mitnehmeroberteil (25) eine zwischen seinen Enden (60) (Fig. 4) verlaufende und in der in Fig. 2 wiedergegebenen Förderrichtung gesehen vorlaufende Querrippe (61) auf. Die Oberseite (62) der Querrippe (61) verläuft schräg nach unten in Bezug auf eine horizontale Ebene (63) und entgegen der Förderrichtung nach hinten. Die vordere obere Querrippenstirnfläche (63) verläuft ihrerseits nach hinten. Sie stellt eine Teilfläche der Stirnfläche (65) des Mitnehmeroberteils (25) dar. Dadurch entsteht eine Kratzerkante (64) am Mitnehmeroberteil (25). Ist die Kante (64) verschlissen, so kann durch Abtragen der Schrägfläche (62) bis zur Verbindungskante (66) und der Flächen (63 und 65) die Kante (64) wiederhergestellt werden.

Deswegen ist eine nachlaufende Querrippe (67) des Mitnehmeroberteils (65) mit ihrer Oberseite (68) und der Horizontalebene (63) angeordnet. Zwischen den beiden Querrippen (61 und 67) liegt ein Querkanal (69), wodurch sich eine hohe Formsteifigkeit des Mitnehmeroberteils ergibt.

Wie sich aus den Fig. 1 und 4 ergibt, laufen die Querrippen (61) an den Aussparungen des Mitnehmeroberteils (25) aus.

Die Darstellung der Fig. 2 zeigt auch, wie die Mitnehmer durch die Zahnlücken (69) der Kettenräder (70) laufen. Dabei liegen die horizontalen Kettenglieder (22 bzw. 23) auf den Zähnen. Die Mitnehmerunterteile (26) sind zwängungsfrei in den Zahnlücken (69) untergebracht.

Die Fig. 5 läßt ein eingespanntes, horizontales Kettenglied (22) mit seinen parallelen Schenkeln (70, 71) und den diese verbindenden Rundungen (72, 73) erkennen, in denen die Rundungen der anschließenden senkrechten Kettenglieder (74 bzw. 75) untergebracht sind. Für diese Kettenglieder sind Konsolen auf den Mitnehmerunterteilen angeordnet, die jedoch in den Figuren nicht sichtbar sind. Insgesamt wird dadurch eine Verspannung der Mitnehmer mit den horizontalen Kettengliedern erreicht, ohne daß die Beweglichkeit der anschließenden senkrechten Kettenglieder (74, 75) beeinträchtigt ist.

**Patentansprüche**

1. Mitnehmer für Kettenkratzförderer, insbesondere des Untertagebetriebes, bestehend aus einem Oberteil (25), in dem eine Hälfte eines Kettenbettes für mindestens ein Flachglied (22) einer Rundstahlkette ausgebildet ist und, vorzugsweise mehrere, senkrechte Aussparungen für zylindrische Abschnitte (40) von Durchsteckschrauben (30, 31) und für deren Muttern (35, 36) vorgesehen sind, sowie einem oder mehreren Unterteilen (26) mit der anderen Hälfte des Kettenbettes und ausfluchtbaren senkrechten Aussparungen für die Spannschrauben (30, 31) und deren Köpfe, die gegen Mitdrehen beim Anziehen der Muttern (35, 36) gesichert sind, dadurch gekennzeichnet, daß die Durchsteckschrauben (30, 31) an beiden Enden ein Muttergewinde (33, 34) und im Mittelbereich einen Glattzylinder (40) aufweisen, der im Mitnehmerunterteil (26) formschlüssig an der Trennebene gegen Mitdrehen gesichert ist, und daß die die Köpfe bildenden Muttern (36) die Mitdrehsicherung (41 bis 47; 48, 49) in formschlüssigen Eingriff halten.

2. Mitnehmer nach Anspruch 1, dadurch gekennzeichnet, daß die Mitdrehsicherung aus einem axialsymmetrisch zum Glattzylinder (40) der Durchsteckschrauben (30, 31) angeordneten Sicherungsflansch (4l) besteht, der formschlüssig in dem inneren Ende der Aussparung (42) des Mitnehmerunterteils (26) sitzt.

3. Mitnehmer nach Anspruch 2, dadurch gekennzeichnet, daß der Sicherungsflansch (41) aus je einer Längsrippe (48, 49) besteht und die Längsrippen (48, 49) sowie mit ihnen formschlüssige Ausnehmungen (50, 51) spiegelsymmetrisch zum Schraubenbolzen und zu seiner Aussparung (42) im Mitnehmerunterteil (26) angeordnet sind.

4. Mitnehmer nach Anspruch l, gekennzeichnet durch eine Mitdrehsicherung aus einem mehrkantigen Sicherungsflansch (4l) und formschlüssigen Anlageflächen (44 bis 47) der Schraubenbolzenaussparung (42) im Mitnehmerunterteil (26).

5. Mitnehmer nach einem der Ansprüche 1 bis 4, dadurch gekennzeichnet, daß die Durchsteckschrauben (30, 31) mit den ihre Köpfe bildenden Muttern, die mit diesen zusammenwirkenden Losdrehsicherungen (37, 39), sowie die Mitnehmerunterteile (26) vormontierte Mitnehmerhälften bilden, und daß die Mitnehmeroberteile (25), sowie die Durchsteckschraubenmuttern (35) Montageteile sind.

6. Mitnehmer insbesondere nach einem der Ansprüche 1 bis 5, dadurch gekennzeichnet, daß in die Aussparungen für die Durchsteckschraubenmuttern (36) und die die Durchsteckschraubenköpfe bildenden Muttern (36) in den Mitnehmerober- und -unterteil (25, 26) radiale Montageausnehmungen (55) der Mitnehmerober- bzw. -unterseite münden, welche auf die Mitnehmerenden (l5) gerichtet sind.

7. Mitnehmer nach Anspruch 6, dadurch gekennzeichnet, daß die Montageausnehmungen (55) schräg nach außen von der Aussparungsringfläche (56) nach oben gerichtete und auf der Mitnehmeraußenseite auslaufende Böden (57) sowie parallele, nach außen divergierende Wände (58, 59) aufweisen, die bis zu den Böden (57) reichen.

8. Mitnehmer nach einem der Ansprüche 1 bis 7, dadurch gekennzeichnet, daß das Mitnehmeroberteil (25) eine zwischen seinen Enden verlaufende, in Förderrichtung vorlaufende Querrippe (61) aufweist, deren Oberseite (62) schräg nach unten gegen die Förderebene (63) entgegen der Förderrichtung und auf den Mitnehmer gerichtet ist, und daß eine vordere, obere Querrippenstirnfläche (63) vorgesehen ist, welche nach oben und gegen die Förderrichtung nach hinten geneigt ist, sowie mit der Querrippenoberseite (62) eine Kratzkante (64) für ein Abdeckblech (4) des Fördereruntertrums (3) bildet.

9. Mitnehmer nach Anspruch 8, dadurch gekennzeichnet, daß das Mitnehmeroberteil (25) zwischen seinen Enden eine in Förderrichtung nachlaufende Querrippe (67) aufweist, zwischen der und der vorlaufenden Querrippe (61) ein Querkanal (69) vorgesehen ist, und daß die Oberseite (68) der nachlaufenden Querrippe (67) unterhalb der Ebene der Oberseite (64) der vorlaufenden Querrippe (61) angeordnet ist.

l0. Mitnehmer nach einem der Ansprüche 8 oder 9, dadurch gekennzeichnet, daß die Querrippen (61, 67) an den Mutternaussparungen mit dem Oberteil (25) enden.

**Claims**

1. A flight bar for a scraper chain conveyor, in particular for underground mining, consisting of an upper portion (25), in which one half of a chain bed is provided for at least one flat link (22) of a round steel chain and, preferably several, vertical recesses are provided for cylindrical sections (40) of through-screws (30, 31) and their nuts (35, 36), and one or more lower portions (26) in which the other half of the chain bed is provided and alignable vertical recesses are provided for the tensioning screws (30, 31) and their heads, which are secured against co-rotation by tightening of the nuts (35, 36), characterised in that the through-screws (30, 31) have a female screwthread (33, 34) on both ends and a smooth cylinder (40) in their central region, which is secured against co-rotation in the lower portion (26) of the flight bar closed to the junction, and that the nuts (36) forming the heads hold the co-rotation securing mechanism (41 to 47; 48, 49) in closed engagement.

2. A flight bar according to claim 1, characterised in that the co-rotation securing mechanism consists of a securing flange (41) arranged in axial symmetry on the smooth cylinder (40) of the through-screws (30, 31), which is seated closed in the inner end of the recess (42) in the lower portion (26) of the flight bar.

3. A flight bar according to claim 2, characterised in that the securing flange (41) has a respective longitudinal rib (48, 49) and the longitudinal ribs (48, 49) and the recesses (50, 51) associated with them are arranged in mirror symmetry to the screw bolt and to its recess (42) in the lower portion (26) of the flight bar.

4. A flight bar according to claim 1, characterised by a co-rotation securing mechanism having a polygonal safety flange (41) and closed bearing surfaces (44 to 47) of the screw bolt recess (42) in the lower portion (26) of the flight bar.

5. A flight bar according to one of claims 1 to 4, characterised in that the through-screws (30, 31) with their head-forming nuts, the mechanisms securing against unscrewing (37, 39) cooperating with these and the lower portions (26) of the flight bar form preassembled flight bar halves, and that the upper portions (25) of the flight bar and the through-screw nuts (35) are assembly parts.

6. A flight bar particularly according to one of claims 1 to 5, characterised in that, in the recesses for the through-screw nuts (36) and the nuts (36) forming the through-screw heads, radial assembly recesses (55) on the upper or lower side of the flight bar open into the upper or lower portion (25, 26) of the flight bar, which are directed towards the flight bar ends (15).

7. A flight bar according to claim 6, characterised in that the assembly recesses (55) inclined outwardly from the annular surface of the recess (56) have bottoms (57) which are directed upwardly and extend outwardly on the flight bar outer side, and parallel outwardly diverging walls (58, 59) which adjoin the bottoms (57).

8. A flight bar according to one of claims 1 to 7, characterised in that the upper portion (25) of the flight bar has a cross rib (61) between its ends extending forwardly in the conveying direction, whose upper side (62) is inclined downwardly relative to the conveying plane (63) oppositely to the conveying direction and is directed to the flight bar, and that a front upper cross rib face (63) is provided which is inclined upwardly and rearwardly against the conveying direction as well as forming a scraping edge (64) with the cross rib upper side (62) for an access plate (4) for the empty belt (3) of the conveyor.

9. A flight bar according to claim 8, characterised in that the upper portion (25) of the flight bar has a cross rib (67) between its ends extending rearwardly in the conveying direction, between which and the forwardly extending cross rib (61) a cross channel (69) is provided, and that the upper side (68) of the rearwardly extending cross rib (67) is arranged below the plane of the upper side (64) of the forwardly extending cross rib (61).

10. A flight bar according to one of claims 8 or 9, characterised in that the cross ribs (61, 67) on the nut recesses end in the upper portion (25).

**Revendications**

1. Raclette pour transporteur à raclettes, en particulier pour exploitations minières souterraines, constituée par une partie supérieure (25) dans laquelle est formée une moitié d'un logement à chaîne pour au moins un maillon plat (22) d'une chaîne à maillon ronds en acier, et de préférence plusieurs évidements verticaux destinés à des sections cylindriques (40) de boulons traversants (30, 31) et pour leurs écrous (35, 36), ainsi qu'une ou plusieurs parties inférieures (26) comprenant l'autre moitié du logement à chaîne et des évidements verticaux en alignement destinés aux boulons traversants (30, 31) et à leurs têtes, qui sont bloqués en rotation lors du serrage des écrous (35, 36), caractérisée en ce que les boulons traversants (30, 31) comprennent aux deux extrémités un filetage à écrou (33, 34) et dans leur région centrale un cylindre lisse (40) qui est bloqué en rotation dans la partie inférieure (26) de la raclette par concordance de formes dans le plan de séparation, et en ce que les écrous (36) formant les têtes sont maintenus bloqués en rotation par concordance de formes (41 à 47; 48, 49).

2. Raclette selon la revendication 1, caractérisée en ce que le blocage en rotation est constitué par une bride de fixation (41) montée axialement et symétriquement par rapport au cylindre lisse (40) des boulons traversants (30, 31), qui se dispose par concordance de formes dans l'extrémité interne de l'évidement (42) de la partie inférieure (26) de la raclette.

3. Raclette selon la revendication 2, caractérisée en ce que la bride de fixation (41) comprend des nervures longitudinales respectives (48, 49), et en ce que les nervures longitudinales (48, 49) ainsi que les évidements (50, 51) de forme correspondante sont disposés symétriquement de façon symétrique par rapport au boulon et par rapport à son évidement (42) dans la partie inférieure (26) de la raclette.

4. Raclette selon la revendication 1, caractérisée par un blocage en rotation constitué par une bride de fixation à arêtes multiples (41) et par des surfaces d'appui de forme correspondante (44 à 47) de l'évidement à boulon (42) dans la partie inférieure (26) de la raclette.

5. Raclette selon l'une quelconque des revendications 1 à 4, caractérisée en ce que les boulons traversants (30, 31) et les écrous qui forment leurs têtes, les dispositifs de blocage en rotation amovibles (37, 39) qui coopèrent avec eux ainsi que les parties inférieures (26) des raclettes forment des moitiés de raclette montées à l'avance, et en ce que les parties supérieures (25) des raclettes ainsi que les écrous (35) des boulons traversants forment des parties de montage.

6. Raclette, notamment selon l'une quelconque des revendication 1 à 5, caractérisée en ce que des évidements de montage radiaux (55) des côtés supérieur ou inférieur de la raclette débouchent dans les évidements destinés aux écrous (36) des boulons traversants et aux écrous (35) formant les têtes des boulons traversants, évidements qui sont dirigés vers les extrémités (15) de la raclette.

7. Raclette selon la revendication 6, caractérisée en ce que les évidements de montage (55) sont dirigés en oblique vers l'extérieur à partir de la surface annulaire (56) de l'évidement, et vers le haut, et présentent des fonds (57) disposés sur le côté extérieur de la raclette ainsi que des parois (58, 59) parallèles et divergeant vers l'extérieur, qui parviennent jusqu'aux fonds (57).

8. Raclette selon l'une quelconque des revendications 1 à 7, caractérisée en ce que la partie supérieure (25) des raclettes comprend une nervure transversale (61) située à l'avant dans la direction du transport et reliant ses extrémités, dont le côté supérieur (62) est dirigé en oblique vers le bas en s'éloignant du plan (63) du transporteur dans le sens contraire à la direction du transport et vers la raclette, et en ce qu'il est prévu une surface frontale avant (63') de la nervure transversale, qui est inclinée vers le haut et vers l'arrière par rapport à la direction du transport et qui forme avec le côté supérieur (62) de la nervure transversale une arête de raclage (64) pour une tôle de recouvrement (4) de la section inférieure (3) du transporteur.

9. Raclette selon la revendication 8, caractérisée en ce que la partie supérieure (25) de la raclette comprend entre ses extrémités une nervure transversale (67) située en arrière dans la direction du transport, un canal transversal (69) étant prévu entre elle et la nervure transversale avant (61), et en ce que le côté supérieur (68) de la nervure transversale (67) située à l'arrière est disposé au-dessous du plan du côté supérieur (64) de la nervure transversale avant (61).

10. Raclette selon la revendication 8 ou 9, caractérisée en ce que les nervures transversales (61, 67) se raccordent à la partie supérieure (25) dans les évidements à écrou.

FIG.1

Förderrichtung

FIG.2

FIG.3

FIG.6

FIG.5

FIG.4

57
60
52 50
51
61
25
26

53 42
56
26
25

54

EP 0 270 702 B1